(19) Europäisches Patentamt / European Patent Office / Office européen des brevets

(11) **EP 3 751 943 B1**

(12) **EUROPEAN PATENT SPECIFICATION**

(45) Date of publication and mention
of the grant of the patent:
**06.12.2023   Bulletin 2023/49**

(21) Application number: **19747475.2**

(22) Date of filing: **01.02.2019**

(51) International Patent Classification (IPC):
**H04W 74/08** (2009.01)      **H04W 16/14** (2009.01)

(52) Cooperative Patent Classification (CPC):
**H04W 74/0841;** H04W 16/14; H04W 74/0808;
H04W 76/11

(86) International application number:
**PCT/KR2019/001465**

(87) International publication number:
**WO 2019/151832 (08.08.2019 Gazette 2019/32)**

(54) **METHOD AND APPARATUS FOR TRANSMITTING RANDOM ACCESS PREAMBLE IN UNLICENSED BAND**

VERFAHREN UND VORRICHTUNG ZUR ÜBERTRAGUNG VON ZUFALLSZUGRIFFSPRÄAMBEL IN EINEM UNLIZENZIERTEN BAND

PROCÉDÉ ET APPAREIL D'ÉMISSION D'UN PRÉAMBULE D'ACCÈS ALÉATOIRE DANS UNE BANDE SANS LICENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.02.2018   US 201862626596 P**

(43) Date of publication of application:
**16.12.2020   Bulletin 2020/51**

(73) Proprietor: LG Electronics Inc.
**Yeongdeungpo-gu
Seoul 07336 (KR)**

(72) Inventors:
• **AHN, Joonkui**
  Seoul 06772 (KR)
• **KIM, Seonwook**
  Seoul 06772 (KR)
• **PARK, Changhwan**
  Seoul 06772 (KR)
• **YOON, Sukhyon**
  Seoul 06772 (KR)

(74) Representative: **Plasseraud IP
66, rue de la Chaussée d'Antin
75440 Paris Cedex 09 (FR)**

(56) References cited:
WO-A1-2016/208927      WO-A1-2017/181124
KR-A- 20170 037 496      KR-A- 20170 053 669
KR-A- 20170 138 471

• **ERICSSON: "NR two-step random access procedure", 3GPP DRAFT; R1-1700300_NR_TWO_STEP_PRACH_PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 16 January 2017 (2017-01-16), XP051207838, Retrieved from the Internet: URL:http://www.3gpp.org/ftp/Meetings_3GPP_SYNC/RAN1/Docs/ [retrieved on 2017-01-16]**
• **ERICSSON: "On the random access procedure", 3GPP DRAFT; R1-167059, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051140526, Retrieved from the Internet: URL:http://www.3gpp.org/ftp/Meetings_3GPP_SYNC/RAN1/Docs/ [retrieved on 2016-08-21]**

- INTERDIGITAL COMMUNICATIONS: "2-step random access procedure", 3GPP DRAFT; R1-1700703, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 10 January 2017 (2017-01-10), pages 1-4, XP051203022, Retrieved from the Internet: URL:http://www.3gpp.org/ftp/tsg_ran/WG1_RL 1/TSGR1_AH/NR_AH_1701/Docs/ [retrieved on 2017-01-10]
- NOKIA et al.: "Resource allocation for Autonomous UL Access", 3GPP TSG-RAN WG1 Meeting #91 R1-1719851, 17 November 2017 (2017-11-17), XP051368878, Reno. NV. United States
- ERICSSON: "On Autonomous UL Transmissions for NR in Unlicensed Spectrum", R1-1800720. 3GPP TSG RAN WGI Meeting AH 1801, 13 January 2018 (2018-01-13), XP051385035, Vancouver. Canada

## Description

### BACKGROUND

Field

The present disclosure relates to wireless communication, and more particularly, to a method of performing a random access procedure in a wireless communication system, and a device using the method.

Related Art

In 3rd generation partnership project (3GPP), there was an agreement on an overall schedule and concept for 5G standardization in a workshop held in September 2015. An enhanced mobile broadband (eMBB), massive machine type communication (MTC), ultra-reliable and low latency communication (URLLC), or the like was specified as a top-level use-case. In order to satisfy a service scenario and a new requirement, in the 3GPP, it was determined to define a new radio (NR) different from the existing long term evolution (LTE), and both the LTE and the NR were defined as a 5G radio access technique.

An unlicensed band is a band in which various communication protocols co-exist. Since various interference factors have to be considered, communication is possible after a clear channel assessment (CCA) is received to confirm a channel state.

A random access procedure is a procedure in which a wireless device performs uplink transmission without additional scheduling from a base station. The random access procedure in the unlicensed band may be excessively delayed due to the execution of the CCA.

The 3GPP Draft No. R1-1700300, entitled "NR two-step random access procedure", discusses the requirements and high-level principles for random access procedure and its implications on PRACH transmission.

### SUMMARY

The present disclosure provides a method for transmitting a random access preamble in an unlicensed band and a device using the method.

In an aspect, a method for transmitting, by a wireless device, a random access preamble in an unlicensed band is provided as set forth in the appended claims.

In another aspect, a wireless device is provided as set forth in the appended claims.

Transmission delay of the random access preamble can be reduced in the unlicensed band in which various communication protocols co-exist.

In the following, embodiments and/or examples not falling within the scope of the appended claims should be understood as mere examples useful for understanding the invention.

### BRIEF DESCRIPTION OF THE DRAWINGS

FIG. 1 shows an example of a radio frame structure to which the present disclosure is applied.
FIG. 2 shows an example of a synchronization channel.
FIG. 3 shows a random access procedure according to the conventional technique.
FIG. 4 shows a random access procedure according to the present disclosure.
FIG. 5 shows an example of transmission of a random access preamble according to the present disclosure.
FIG. 6 is a block diagram showing a wireless communication system for implementing the present disclosure.

### DESCRIPTION OF EXEMPLARY EMBODIMENTS

Technical features described below may be used in a communication standard by the 3rd generation partnership project (3GPP) standardization organization or a communication standard by the institute of electrical and electronics engineers (IEEE) standardization organization. For example, the communication standard by the 3GPP standard organization includes long term evolution (LTE) and/or an evolution of an LTE system. The evolution of the LTE system includes LTE-advanced (LTE-A), LTE-A Pro, and/or a 5G new radio (NR).

The communication standard by the IEEE standard organization includes a wireless local area network (LAN) system such as IEEE 802.11a/b/g/b/ac/ax or the like. The aforementioned system uses various multiple access techniques such as orthogonal frequency division multiple access (OFDMA) and/or single carrier-frequency division multiple access (SC-FDMA) or the like in uplink and/or downlink. For example, only the OFDMA may be used in downlink and only the SC-FDMA may be used in uplink, or the OFDMA and the SC-FDMA may be used together in downlink and/or uplink.

A wireless device may be fixed or mobile, and may be referred to as another terminology, such as a user equipment (UE), a mobile station (MS), a mobile terminal (MT), a user terminal (UT), a subscriber station (SS), a personal digital assistant (PDA), a wireless modem, a handheld device, etc. The wireless device may also be a device supporting only data communication such as a machine-type communication (MTC) device.

A base station (BS) is generally a fixed station that communicates with the wireless device, and may be referred to as another terminology, such as an evolved-NodeB (eNB), a gNB, a base transceiver system (BTS), an access point, etc. A transmission reception point (TRP) includes an antenna array having one or more antenna elements. The BS may include one or more TRPs.

A new radio (NR) which is a 5G radio access technique supports various bandwidths and frequency bands for more flexible scheduling. Not only a frequency band below 6 GHz but also a frequency band above 6 GHz is supported. A supported bandwidth is up to 100 MHz in the band below 6 GHz and is up to 400 MHz in the band above 6 GHz. In addition, unlike the 3GPP LTE in which a subcarrier spacing is fixed to 15 kHz, the NR may support a variety of subcarrier spacing of 15 kHz, 30 kHz, 60 kHz, 120 KHz, and 240 kHz.

The NR standard supports various numerologies. A structure of a radio frame varies depending on the numerology. Table 1 shows an example of the numerology to be supported.

[Table 1]

| Numerology Index ($\mu$) | Subcarrier spacing (kHz) | Cyclic prefix | Number of OFDM symbols per slot | Number of slots per radio frame | Number of slots per subframe |
|---|---|---|---|---|---|
| 0 | 15 | Normal | 14 | 10 | 1 |
| 1 | 30 | Normal | 14 | 20 | 2 |
| 2 | 60 | Normal | 14 | 40 | 4 |
| 2 | 60 | Extended | 12 | 40 | 4 |
| 3 | 120 | Normal | 14 | 80 | 8 |
| 4 | 250 | Normal | 14 | 160 | 16 |

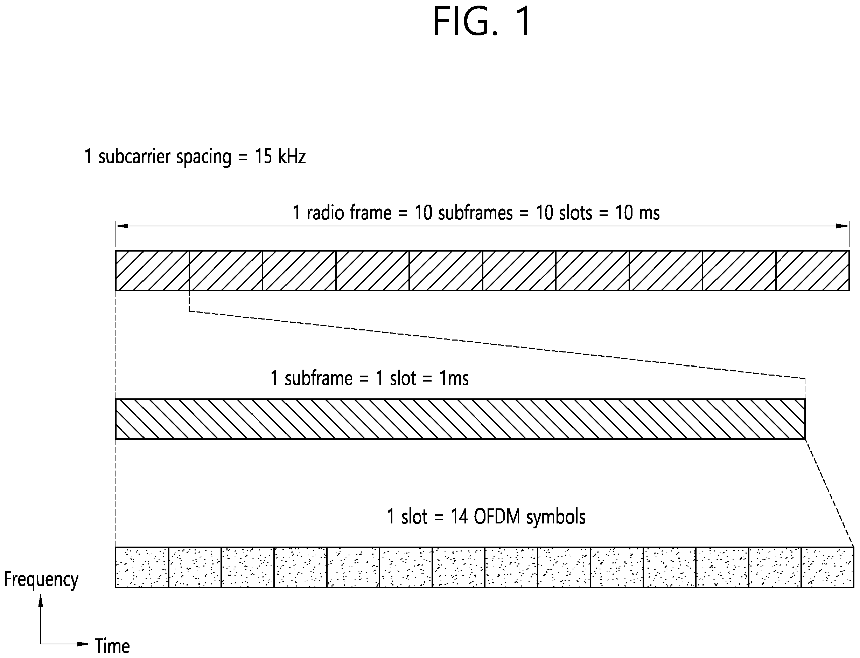

FIG. 1 shows an example of a radio frame structure to which the present disclosure is applied. FIG. 1 shows an example of a numerology index $\mu$=0.

A slot may include a plurality of orthogonal frequency division multiplexing (OFDM) symbols. The number of OFDM symbols in a slot of Table 1 is for exemplary purposes only. The OFDM symbol is only for expressing one symbol period in a time region, and is not limited to a multiple-access scheme or a terminology. For example, the OFDM symbol may be referred to as another terminology such as a single carrier-frequency division multiple access (SC-FDMA) symbol, a symbol period, or the like.

The OFDM symbol in the slot may be divided for downlink (DL), flexible, and uplink (UL). This division may be called as a slot format. Information on the slot format may be reported to a wireless device by a BS. The wireless device may receive information on the slot format through a higher layer signal and/or downlink control information (DCI) on a physical downlink control channel (PDCCH). The wireless device assumes that DL transmission occurs in a DL OFDM symbol or a flexible OFDM symbol. The wireless device may perform UL transmission in a UL OFDM symbol or a flexible OFDM symbol.

A resource block (RB) may include a plurality of subcarriers contiguous in a frequency region. For example, the RB may include 12 subcarriers. A common RB (CRB) is an RB in which an index is determined according to a numerology. A physical RB (PRB) is an RB defined in a bandwidth part (BWP). Assume that there are 20 RBs in the overall bandwidth of a specific numerology. The CRB is indexed from 0 to 19. When the BWP includes four CRBs (from a CRB 4 to a CRB 7) among the 20 RBs, the PRB in the BWP is indexed from 0 to 3.

The BWP may be defined according to a size and a start point from the CRB 0 on a given carrier. A specific number (e.g., up to 4) of BWPs may be configured to the wireless device. Only a specific number (e.g., 1) of BWPs may be activated for each cell at a specific time point. The number of configurable BWPs or the number of BWPs to be activated may be configured commonly for UL and DL or may be configured individually. The wireless device may expect DL transmission only in an activated DL BWP. The wireless device may perform UL transmission only in an activated UL BWP.

The wireless device may obtain a time and/or frequency synchronization with a cell, and may perform cell discovery to obtain a cell identifier (ID). A synchronization channel such as a primary synchronization signal (PSS), a secondary synchronization signal (SSS), a physical broadcast channel (PBCH), or the like may be used for the cell discovery.

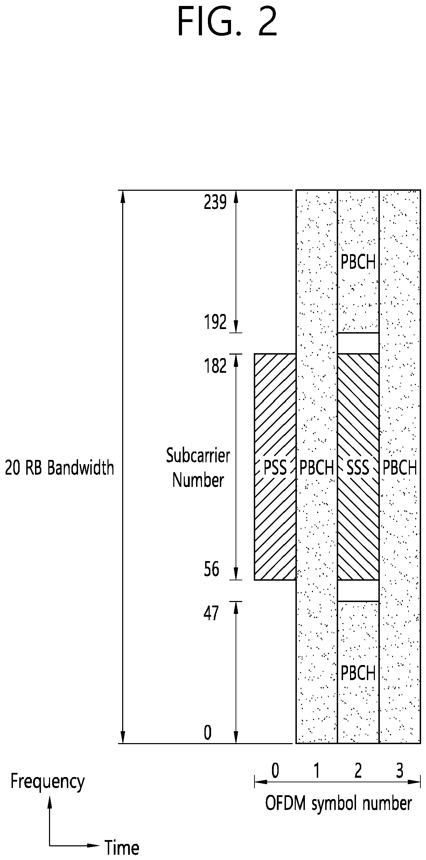

FIG. 2 shows an example of a synchronization channel. Each of a PSS and an SSS may be transmitted through 127 subcarriers in one OFDM symbol. A PBCH may be transmitted through 240 subcarriers in 3 OFDM symbols.

A synchronization signal/PBCH (SSB) block includes a time/frequency region in which the PSS, the SSS, and the PBCH are transmitted. The PSS is used to obtain a symbol timing of the SSB block, and indicates three hypotheses for identifying a cell ID. The SSS is used to identify the cell ID, and indicates 336 hypotheses. As a result, 1008 physical cell IDs may be indicated through the PSS and the SSS.

The SSB block may be transmitted repeatedly according to a predetermined pattern in an SSB window. The SSB window may have a length of 5ms. For example, when L SSB blocks are transmitted during one SSB window, all of the L SSB blocks include the same information, but may be transmitted through beams of different directions. That is, a quasi co-location (QCL) may not be applied for the SSB blocks in one SSB window. A beam used to receive the SSB block may be used in a subsequent operation (e.g., a random access operation or the like) between a wireless device and a network. The SSB window may be repeated with a specific period (e.g., 20 ms). The repetition period may be determined individually according to a numerology.

The PBCH has a bandwidth of 20 RBs in 2nd and 4th OFDM symbols, and has a bandwidth of 8 RBs in a 3rd OFDM symbol. A demodulation reference signal (DMRS) for decoding the PBCH is included in the PBCH. A frequency region is determined in the DMRS according to a cell ID value. The DMRS for the PBCH may include information indicating an index of an SSB block.

The PBCH may carry a master information block (MIB). System information (SI) is divided into minimum SI (MSI) and other SI (OSI). The MSI may be divided again into MIB and system information type1 (SIB1), and the remaining MSI except for the MIB may be called remaining minimum SI (RMSI).

The MIB includes information required to decode the SIB 1. For example, the MIB may include at least any one of the SIB1, a message used in the random access procedure, a subcarrier spacing applied to other system information, a frequency offset between RBs transmitted after an SSB block, a bandwidth of PDCCH/SIB, and information for decoding the PDCCH. The MIB may be transmitted periodically, and the same information may be transmitted repeatedly for a specific time period. The SIB1 includes control information, transmitted repeatedly through the PDSCH, for initial access of the UE and information for decoding a different SIB.

ADL channel includes a physical downlink control channel (PDCCH), a physical downlink shared channel (PDSCH), and a physical broadcast channel (PBCH). The UL channel includes a physical uplink control channel (PUCCH), a physical uplink shared channel (PUSCH), and a physical random access channel (PRACH).

The PDSCH carries DL data. The PBCH carries a master information block (MIB) required for initial access. The PUSCH carries UL data.

The PDCCH carries DCI. The DCI includes a UL grant having resource allocation for scheduling PUSCH transmission and a DL grant having resource allocation for scheduling PDSCH transmission. A control resource set (CORESET) is defined as a resource for monitoring the PDCCH. In order to allow the wireless device to identify an owner or content of the DCI in the PDCCH, a unique identifier is masked to cyclic redundancy check (CRC) of the DCI. This identifier is called a radio network temporary identifier (RNTI). When the DCI includes a UL grant or DL grant for a specific wireless device, a cell RNTI (C-RNTI) is used. When the DCI carries system information, a system information RNTI (SI-RNTI) is used.

The PUCCH carries uplink control information (UCI). The UCI may include hybrid automatic repeat request (HARQ) ACK/NACK and/or channel state information (CSI). The PUCCH may be transmitted in one or more OFDM symbols according to a PUCCH format.

In the following example, an operation may be performed in a licensed band or an unlicensed band. The licensed band is a band in which an exclusive use is ensured to a specific communication protocol or a specific service provider. The unlicensed band is a band in which various communication protocols co-exist and a shared use is ensured. For example, the unlicensed band may include 2.4 GHz and/or 5 GHz bands used by a wireless local area network (WLAN). In the unlicensed band, it is assumed that a channel is secured through contention between communication nodes. Accordingly, communication in the unlicensed band is required to perform channel sensing so as to confirm that another communication node does not transmit a signal. For convenience, this is called listen before talk (LBT) or clear channel assessment (CCA). A case where it is determined that another communication node does not transmit a signal in a specific channel is called that 'a channel is idle', 'CCA is confirmed', or 'LBT is confirmed'. When it is said that 'LBT is performed' or 'CCA is performed' or 'carrier sense (CS) is performed', it means that whether a wireless medium is idle or whether a channel of another node is used is confirmed and thereafter an access to the channel is achieved. A cell operating in an unlicensed band is called an unlicensed cell or a licensed-assisted access (LAA) cell. A cell operating in a licensed band is called a licensed cell.

Each serving cell may correspond to a BWP or a carrier. The serving cell may be divided into a primary cell and a secondary cell. The primary cell is a cell in which a wireless device performs initial connection establishment or connection re-establishment. The secondary cell is activated or deactivated by an instruction of the primary cell. When a plurality of serving cells are configured to the wireless device, the primary cell may be a licensed cell, and the secondary cell may be an unlicensed cell. Alternatively, the primary cell may be an unlicensed cell, and the secondary cell may be a licensed cell. A plurality of licensed cells or a plurality of unlicensed cells may be configured.

Beamforming utilizing a plurality of antennas is used in an NR system. A transmitter transmits a beam which covers a relatively narrow region. However, beam sweeping for transmitting a beam in several directions may be performed to cover the entire coverage of a cell.

A random access procedure is a procedure in which a wireless device performs UL transmission without additional UL scheduling from a BS. The random access procedure is used for various purposes such as initial access, connection reestablishment, handover, time alignment establishment, system information request, beam failure recovery, etc.

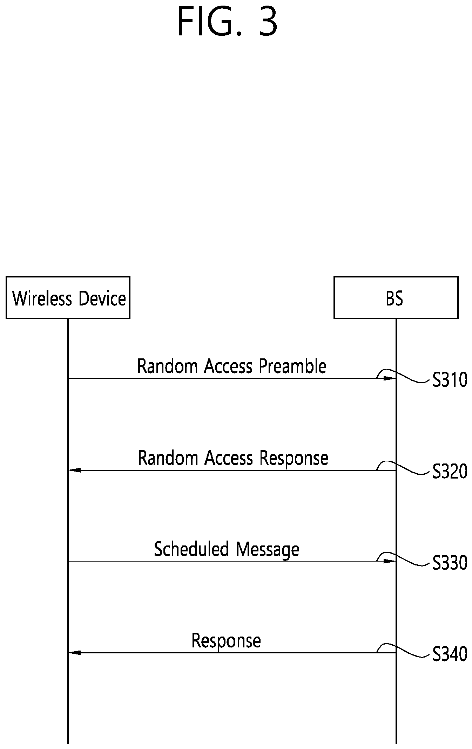

FIG. 3 shows a random access procedure according to the conventional technique.

In step S310, a wireless device transmits a random access preamble to a BS. The random access preamble may be randomly selected by the wireless device from among a plurality of preamble sequences.

In step S320, the wireless device receives a random access response on a PDSCH. The PDSCH is scheduled by a PDCCH (called RA_PDCCH) masked by random access (RA)-RNTI. The wireless device first receives DCI having DL resource allocation for the PDSCH on the RA-PDCCH, and then receives the random access response on the basis of the DL resource allocation. The random access response includes temporary C-RNTI and UL resource allocation for a scheduled message.

In step S330, the wireless device transmits to the BS the scheduled message on the basis of a UL resource allocation in the random access response. The scheduled message includes a device identifier in the wireless device. The device identifier includes an identifier such as an international mobile subscriber identity (IMSI), a temporary international mobile subscriber identity (TIMSI), etc., used by the BS to actually identify the wireless device.

In step S340, the wireless device receives a response of the scheduled message from the BS. The response includes the device identifier and information required for connection. Accordingly, the random access procedure is complete.

According to the conventional random access procedure, the procedure is complete after the message is exchanged four times between the BS and the wireless device. However, in the unlicensed band, it may take long time to complete the random access procedure since a channel state must be confirmed before the message is transmitted.

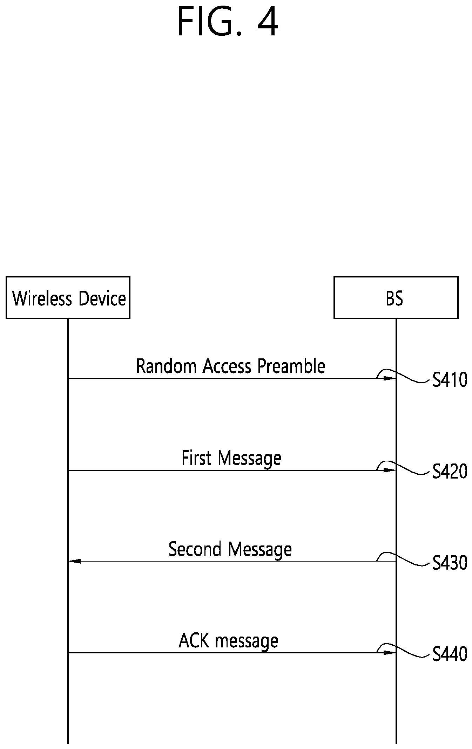

FIG. 4 shows a random access procedure according to the present disclosure.

In step S410, a wireless device transmits a random access preamble to a BS. The BS operates an unlicensed cell. The random access preamble is transmitted in the unlicensed cell. The unlicensed cell may be a primary cell or a secondary cell. Before the random access preamble is transmitted, the wireless device performs CCA to confirm whether a wireless medium (e.g., a frequency region in which the random access preamble is transmitted) is idle. Upon confirming that the wireless medium is idle, the wireless device transmits the random access preamble. If the wireless medium is not idle, the wireless device may perform again the CCA after a backoff time elapses.

The wireless device may transmit a sequence selected from among a plurality of preamble sequences as a random access preamble. The plurality of preamble sequences may be generated based on a Zadoff-Chu sequence.

【Equation 1】

$$x_{u,v}(n) = x_u((n+Cv) \bmod N), \quad x_{u(i)} = e^{-j\frac{\pi u i(i+1)}{N}}$$

Herein, N is a sequence length, Cv is a cyclic shift value, and u is a root index i=0, 1, ..., N. N may vary depending on a random access preamble format.

A resource configuration for the random access preamble may be given in advance by the BS. The resource configuration may include a value used to determine the value u, an RA time resource and RA frequency resource for transmitting the random access preamble, and information on a subcarrier spacing for transmitting the random access preamble. The RA time resource may indicate at least one slot in which the random access preamble can be transmitted among a plurality of slots and an OFDM symbol index at which transmission starts within the slot. The RA frequency resource may indicate at least one RB for transmitting the random access preamble within a BWP.

In step S420, the wireless device transmits a first message to the BS. The first message may be transmitted simultaneously with the random access preamble or after the random access preamble is transmitted. 'Simultaneous transmission' may imply that the random access preamble and the first message are transmitted in the same slot, or transmission starts on the same OFDM symbol in a slot. When it is said that 'the first message is transmitted after the random access preamble is transmitted', it implies that the first message is transmitted in a slot after the slot in which the random access preamble is transmitted, or an OFDM symbol on which transmission of the first message starts appears after an OFDM symbol on which transmission of the random access preamble starts in the slot.

The first message includes a device identifier used to identify the wireless device. The device identifier may include IMSI or TIMSI, but is not limited thereto. The first message may further include information indicating a purpose of the random access procedure.

The first message is transmitted on a PUSCH. A PUSCH resource used in transmission of the PUSCH for the first message may be classified into a PUSCH frequency resource, a PUSCH time resource, and a PUSCH sequence resource. The PUSCH frequency resource may indicate at least one RB in which the PUSCH is transmitted within the BWP. The PUSCH time resource may indicate a slot in which the PUSCH is transmitted and/or an OFDM symbol index at which transmission starts in the slot. The PUSCH sequence resource may indicate a scrambling sequence used in scrambling of the PUSCH and/or a sequence used in generation of a reference signal (RS) of the PUSCH.

In an embodiment, the PUSCH resource used in transmission of the PUSCH for the first message may be associated with a transmission resource of the random access preamble. More specifically, any one of the PUSCH time/frequency/sequence resources used in transmission of the PUSCH for the first message is determined based on at least any one of a sequence of the random access preamble, an RA time resource, and an RA frequency resource.

For example, when the random access preamble is transmitted in a slot k, the first message is transmitted in a slot k+m. The value of m may be pre-designated, or may be determined according to the value of k. For another example, the first message may be transmitted in the same RB as the RB in which the random access preamble is transmitted. The RB in which the first message is transmitted may be determined based on the RB in which the random access preamble is transmitted.

The first message includes information on a transmission resource of the random access preamble. This is because the BS may not be able to estimate a relationship between the random access preamble and the first message, based only on an association of the transmission resource of the random access preamble and the PUSCH transmission resource. The information may be directly included in the first message, or may be multiplexed with uplink control information (UCI) to the first message, or may be masked to CRC of the first message.

In step S430, the wireless device receives a second message from the BS. If the first message is successfully decoded, the BS transmits the second message in response to the first message.

The second message includes an auxiliary identifier obtained from the device identifier. The auxiliary identifier has a smaller number of bits than the device identifier.

The second message may be transmitted on a PDSCH. The wireless device may first receive a PDCCH having scheduling information of the PDSCH (this is called 'A-PDCCH'), and may receive the second message on the PDSCH on the basis of the scheduling information. The wireless device monitors the A-PDCCH in a search space having a plurality of PDCCH candidates. An identifier masked to CRC of the A-PDCCH is called A-RNTI. An identifier used to generate a scrambling sequence used in a scramble of the A-PDCCH is called an S-ID.

In an embodiment not covered by the claims, embodiment, the second message may be transmitted as an additional message to each wireless device.

A transmission resource of A-PDCCH may be associated with at least any one of a transmission resource of the random access preamble, a device identifier, and an auxiliary identifier. For example, at least any one of a search space, A-RNTI, and S-ID for monitoring the A-PDCCH may be associated with at least any one of a sequence of the random access preamble, an RA time resource, an RA frequency resource, a device identifier, and an auxiliary identifier.

The transmission resource of the A-PDCCH may be associated with a PUSCH resource used in transmission of the PUSCH for the first message. For example, at least any one of the search space, A-RNTI, and S-ID for monitoring the A-PDCCH may be associated with at least any one of the PUSCH time/frequency/sequence resources, device identifier, and auxiliary identifier used in transmission of the PUSCH for the first message.

In another embodiment not covered by the claims, the second message may be transmitted as a common message for all wireless devices in a cell or a group of the wireless devices in the cell. A plurality of wireless devices for performing the random access preamble may receive one common second message, and may extract information for the wireless devices from the second message. The transmission resource of the A-PDCCH may be associated with a common identifier for all wireless devices in a cell or a group of the wireless devices in the cell. For example, at least any one of the search space, A-RNTI, and S-ID for monitoring the A-PDCCH may be associated with the common identifier.

In step S440, the wireless device may transmit to the BS an ACK message based on a decoding result of the second message. When the random access procedure is complete by receiving the second message, this step may be omitted. The ACK message may include HARQ ACK/NACK. The HARQ ACK/NACK may be transmitted on a PUCCH.

The second message may include information on a transmission resource of the PUCCH for the HARQ ACK/NACK. The transmission resource of the PUCCH for the HARQ ACK/NACK may be obtained based on a transmission resource of an A_PDCCH for the second message. The transmission resource of the PUCCH for the HARQ ACK/NACK may be defined as at least one of a device identifier, an auxiliary identifier, a random access preamble sequence, an RA frequency resource, an RA time resource, and a PUSCH time/frequency/sequence resource used in transmission of the PUSCH for the first message.

When the second message is received from the BS, the random access procedure cannot be complete. Therefore, the random access procedure can be prevented from being delayed since no additional CCA needs to be performed.

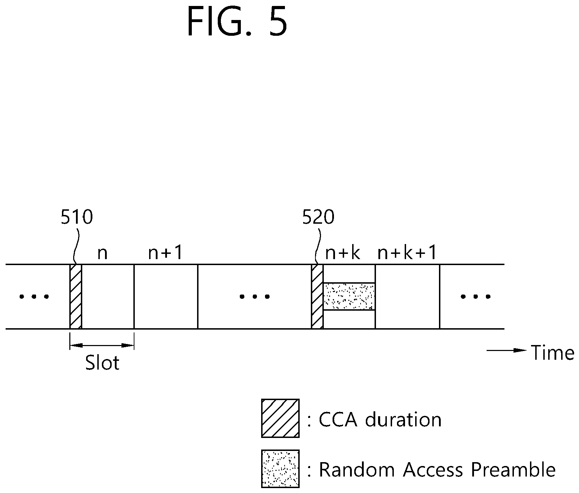

FIG. 5 shows an example of transmission of a random access preamble according to the present disclosure. The transmission of the random access preamble may be applied to transmission of the random access preamble shown in FIG. 4.

Assume that the random access preamble can be transmitted in a slot n. The wireless device performs CCA for a CCA duration 510 of an unlicensed band. The CCA duration may include one or more OFDM symbols as a duration in which the CCA is performed. Alternatively, the CCA duration may include part of one OFDM symbol. If the current measurement value is less than the CCA threshold, the wireless device may determine that a wireless medium is idle and the CCA succeeds. Otherwise, the wireless device may determine that the wireless medium is not idle and the CCA fails.

If the CCA fails in the slot n, the wireless device defers the transmission of the random access preamble for next time. The CCA is performed for a CCA duration 520 in a next possible slot n+k. If the CCA succeeds, the wireless device transmits the random access preamble.

If the same CCA threshold is maintained when the CCA is performed again after the CCA failure, the transmission of the random access preamble may be excessively delayed.

In an embodiment, when a next CCA is retried after the CCA failure, a next CCA threshold may be greater than a previous CCA threshold. When the next CCA is retried after the CCA failure, the next CCA duration may be shorter than the previous CCA duration. A CCA success rate may be increased to prevent the delay of the transmission of the random access preamble.

In another embodiment, when the next CCA is retried after the CCA failure, the next CCA threshold may be less than the previous CCA threshold. When the next CCA is retried after the CCA failure, the next CCA duration may be longer than the previous CCA duration. This is to prevent a collision of preamble transmission by decreasing the CCA success rate, when a plurality of wireless devices simultaneously attempt the random access procedure in a continuous manner.

When it is said that the CCA duration is increased or decreased, it may imply that the CCA duration is increased or decreased. For example, a length of the CCA duration may be increased from 5 microsecond (us) to 9 us. Alternatively, when the CCA duration includes a plurality of continuous CCA slots, the CCA duration may be increased or decreased by increasing or decreasing the number of CCA slots included for each CCA duration.

The conventional random access procedure declares a failure in the random access procedure if the number of times of failing in the random access preamble transmission exceeds a maximum value. The failure in the transmission of the random access preamble implies that the wireless device transmits the random access preamble but fails in receiving a random access response thereon or a second message. In an unlicensed band, the wireless device continuously fails in the CCA, which may result in a continuous failure in transmission of the random access preamble. Accordingly, the CCA failure may be necessarily associated with the failure in the random access procedure.

Xmax denotes the maximum number of times of failing in transmission of a random access preamble, and X denotes a count value depending on a failure in the transmission of the random access preamble. Ymax denotes a maximum CCA failure count, and Y denotes a CCA failure count. Xmax and Ymax may be predefined, or may be given by the BS.

In an embodiment not covered by the claims, if a sum of X and Y exceeds Zmax, the wireless device may declare a random access failure. Zmax may be predetermined, or may be given by the BS.

In another embodiment not covered by the claims, if X exceeds Xmax, or Y exceeds Ymax, the wireless device may declare the random access failure. Y may be reset whenever the wireless device transmits the random access preamble once. Alternatively, Y may be reset after the random access procedure fails or succeeds.

In another embodiment not covered by the claims, if X exceeds Xmax, or Y exceeds Ymax, or a sum of X and Y exceeds Zmax, the wireless device may declare the random access failure. Y may be reset whenever the wireless device transmits the random access preamble once. Alternatively, Y may be reset after the random access procedure fails or succeeds.

In another embodiment not covered by the claims, if X exceeds Xmax, the wireless device may declare the random access failure. Qmax is defined as the maximum number of times for attempting CCA per preamble. Qmax may be predefined, or may be given by the BS. If Y exceeds Qmax, the wireless device may reset Y, and may increase X by 1.

If the wireless device fails in transmission of the random access preamble in a time/frequency resource or fails in CCA, it may be estimated that many devices have attempted preamble transmission or traffic is congested in the time/frequency resource. In order to increase a success rate of the random access procedure, the BS may adaptively increase or decrease a transmission resource of the random access preamble. The BS may use DCI or PDSCH to configure an additional resource for transmission of the random access preamble. The additional resource may be used in retransmission of the random access preamble of which transmission has failed, or may be used when the random access preamble is not transmitted due to a CCA failure. The additional resource may be preconfigured, and DCI may be used to activate or deactivate the additional resource.

If a specific wireless device occupies a channel for relatively long time in an unlicensed band, giving a penalty to CCA may be a way of ensuring fairness to transmission between different devices. The random access preamble may vary in length in a time region according to a target coverage or channel state. The longer the length of the random access preamble, the smaller the CCA threshold may be applied. Alternatively, the longer the random access preamble, the longer the CCA duration may be applied.

The random access procedure may be divided into a contention based random access procedure using a randomly selected random access preamble and a contention free random access procedure using a pre-designated random access preamble. Since the contention free random access procedure may be planned to avoid collision of the BS with respect to another device, it may be advantageous to more increase a CCA success rate. The contention free random access procedure may have a greater CCA threshold than the contention based random access procedure. Alternatively, the contention free random access procedure may have a much shorter CCA duration than the contention based random access procedure.

The random access procedure is used for various purposes such as initial access, connection reestablishment, handover, time alignment establishment, system information request, beam failure recovery, etc. The beam failure recovery requires more rapid processing, as a procedure of requesting for confirming/switching a beam by determining that there is a problem in a beam used by the wireless device for communication with the BS. The random access procedure for the beam failure recovery may have a greater CCA threshold than a random access procedure of another purpose. Alternatively, the random access procedure for the beam failure recovery may have a shorter CCA duration than the random access procedure of another purpose.

When the conventional random access procedure of FIG. 3 and the proposed random access procedure of FIG. 4 are both used, since the proposed random access procedure intends a more rapid random access, it may be more advantageous to increase a CCA success rate. The proposed random access procedure may have a greater CCA threshold than the conventional random access procedure. Alternatively, the proposed random access procedure may have a shorter CCA duration than the conventional random access procedure.

The contention free random access procedure may decrease the CCA success rate so that the BS surely avoids collision with another device in comparison with the contention based random access procedure. The contention free random access procedure may have a smaller CCA threshold than the contention based random access procedure. Alternatively, the contention free random access procedure may have a longer CCA duration than the contention based random access procedure.

When the random access procedure of FIG. 3 and the proposed random access procedure of FIG. 4 are both used, the CCA success rate may be decreased so that the proposed random access procedure ends earlier than the conventional random access procedure with collision with another device. The proposed random access procedure may have a shorter CCA threshold than the conventional random access procedure. Alternatively, the proposed random access procedure may have a longer CCA duration than the conventional random access procedure.

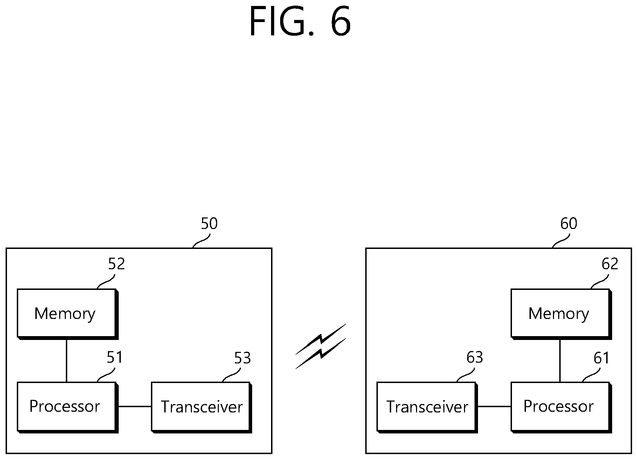

FIG. 6 is a block diagram showing a wireless communication system for implementing the present disclosure.

A wireless device 50 includes a processor 51, a memory 52, and a transceiver 53. The memory 52 is operatively coupled to the processor 51, and stores various instructions executed by the processor 51. The transceiver 53 is operatively coupled to the processor 51, and transmits and/or receives a radio signal. The processor 51 implements the proposed functions, procedures, and/or methods. In the aforementioned embodiment, an operation of the wireless device may be implemented by the processor 51. When the aforementioned embodiment is implemented with a software instruction, the instruction may be stored in the memory 52, and may be executed by the processor 51 to perform the aforementioned operation.

ABS 60 includes a processor 61, a memory 62, and a transceiver 63. The memory 62 is operatively coupled to the processor 61, and stores various instructions executed by the processor 61. The transceiver 63 is operatively coupled to the processor 61, and transmits and/or receives a radio signal. The processor 61 implements the proposed functions, procedures, and/or methods. In the aforementioned embodiment, an operation of the BS may be implemented by the processor 61. When the aforementioned embodiment is implemented with a software instruction, the instruction may be stored in the memory 62, and may be executed by the processor 61 to perform the aforementioned operation.

The processor may include Application-specific Integrated Circuits (ASICs), other chipsets, logic circuits, and/or data processors. The memory may include Read-Only Memory (ROM), Random Access Memory (RAM), flash memory, memory cards, storage media and/or other storage devices. The transceiver may include a baseband circuit for processing a radio signal. When the embodiment is implemented in software, the aforementioned scheme may be implemented using a module (procedure, function, etc.) which performs the aforementioned function. The module may be stored in the memory and executed by the processor. The memory may be disposed to the processor internally or externally and connected to the processor using a variety of well-known means.

**Claims**

1. A method for transmitting, by a wireless device (50), a random access preamble in an unlicensed band, the method comprising:

   performing a clear channel assessment, CCA, on a wireless medium of the unlicensed band;
   transmitting a random access preamble by using a random access resource based on a success of the CCA;
   transmitting a first message including a device identifier identifying the wireless device (50) on a physical uplink shared channel, PUSCH,
   wherein a transmission resource used for transmitting the PUSCH is determined based on the random access resource,
   wherein the first message includes information related to the random access resource, and
   wherein the transmission resource used for transmitting the PUSCH is in a slot after a certain number of slots, which is determined based on a slot in which the random access preamble is transmitted, from the random access resource; and
   receiving a second message as a response to the first message,
   wherein the second message includes an auxiliary identifier, which has fewer bits than the device identifier, obtained based on the device identifier.

2. The method of claim 1, wherein the first message is transmitted without waiting to receive a response of the random access preamble.

3. The method of claim 1, wherein the random access resource includes the time resource and a frequency resource used to transmit the random access preamble.

4. The method of claim 1, wherein the transmission resource used for transmitting the PUSCH includes a PUSCH sequence resource.

5. The method of claim 1, wherein receiving the second message comprises:

   receiving a physical downlink control channel, PDCCH, carrying a scheduling information for a physical downlink shared channel, PDSCH; and
   receiving the second message on the PDSCH related to the scheduling information,
   wherein a resource used to receive the PDCCH is determined based on the random access resource, and
   wherein the resource used to receive the PDCCH includes a search space for monitoring the PDCCH, an identifier for masking a cyclic redundancy check, CRC, of the PDCCH and a scrambling sequence for scrambling the PDCCH.

6. The method of claim 1, wherein performing the CCA comprises:

   performing the CCA based on a first CCA threshold and a first CCA duration;
   determining that the CCA based on the first CCA threshold and the first CCA duration has failed; and
   retrying the CCA, based on a second CCA threshold which is greater than the first CCA threshold and a second CCA duration which is shorter than the first CCA duration.

7. The method of claim 1, wherein performing the CCA comprises:

   performing the CCA based on a first CCA threshold and a first CCA duration;
   determining that the CCA based on the first CCA threshold and the first CCA duration has failed; and
   retrying the CCA, based on a second CCA threshold which is smaller than the first CCA threshold and a second CCA duration which is longer than the first CCA duration.

8. The method of claim 1, further comprising:

   transmitting an ACK message for representing a decoding result of the second message,
   wherein the ACK message is transmitted based on a physical uplink control channel, PUCCH, resource, and
   wherein the second message includes information related to the PUCCH resource.

9. A wireless device (50) configured for transmitting a random access preamble in an unlicensed band, the wireless device (50) comprising:

a transceiver (53) configured to transmit and receive a radio signal; and
a processor (51) operatively coupled to the transceiver (53) and configured to:

control the transceiver (53) to perform a clear channel assessment, CCA, on a wireless medium of the unlicensed band;
control the transceiver (53) to transmit a random access preamble by using a random access resource based on a success of the CCA;
control the transceiver (53) to transmit a first message including a device identifier identifying the wireless device (50) on a physical uplink shared channel, PUSCH,
wherein a transmission resource used for transmitting the PUSCH is determined based on the random access resource,
wherein the first message includes information related to the random access resource, and
wherein the transmission resource used for transmitting the PUSCH is in a slot after a certain number of slots, which is determined based on a slot in which the random access preamble is transmitted, from the random access resource; and
control the transceiver (53) to receive a second message as a response to the first message,
wherein the second message includes an auxiliary identifier, which has fewer bits than the device identifier, obtained based on the device identifier.

10. The wireless device (50) of claim 9, wherein the first message is transmitted without waiting to receive a response of the random access preamble.

11. The wireless device (50) of claim 9, wherein the random access resource includes the time resource and a frequency resource used to transmit the random access preamble.

12. The wireless device (50) of claim 9, wherein the transmission resource used for transmitting the PUSCH includes a PUSCH sequence resource.

**Patentansprüche**

1. Verfahren zum Übertragen, durch eine Drahtlosvorrichtung (50), einer Zufallszugriffspräambel in einem unlizenzierten Band, wobei das Verfahren umfasst:

Durchführen einer Freikanalanalyse, CCA, auf einem Drahtlosmedium des unlizenzierten Bandes;
Übertragen einer Zufallszugriffspräambel unter Verwendung einer Zufallszugriffsressource auf Basis eines Erfolgs der CCA;
Übertragen einer ersten Nachricht, die eine Vorrichtungskennung beinhaltet, die die Drahtlosvorrichtung (50) identifiziert, auf einem gemeinsam genutzten physikalischen Aufwärtsstreckenkanal, PUSCH,
wobei eine Übertragungsressource, die zum Übertragen des PUSCH verwendet wird, auf Basis der Zufallszugriffsressource bestimmt wird,
wobei die erste Nachricht Informationen beinhaltet, die sich auf die Zufallszugriffsressource beziehen, und
wobei die Übertragungsressource, die zum Übertragen des PUSCH verwendet wird, in einem Schlitz nach einer bestimmten Anzahl von Schlitzen liegt, der auf Basis eines Schlitzes, in dem die Zufallszugriffspräambel übertragen wird, von der Zufallszugriffsressource bestimmt wird; und
Empfangen einer zweiten Nachricht als Antwort auf die erste Nachricht,
wobei die zweite Nachricht eine auf Basis der Vorrichtungskennung erhaltene Hilfskennung, die weniger Bits aufweist als die Vorrichtungskennung, beinhaltet.

2. Verfahren nach Anspruch 1, wobei die erste Nachricht übertragen wird, ohne auf den Empfang einer Antwort der Zufallszugriffspräambel zu warten.

3. Verfahren nach Anspruch 1, wobei die Zufallszugriffsressource die Zeitressource und eine Frequenzressource beinhaltet, die verwendet werden, um die Zufallszugriffspräambel zu übertragen.

4. Verfahren nach Anspruch 1, wobei die Übertragungsressource, die zum Übertragen des PUSCH verwendet wird, eine PUSCH-Sequenzressource beinhaltet.

5. Verfahren nach Anspruch 1, wobei das Empfangen der zweiten Nachricht umfasst:

Empfangen eines physikalischen Abwärtsstrecken-Steuerkanals, PDCCH, der eine Planungsinformation für einen gemeinsam genutzten physikalischen Abwärtsstreckenkanal, PDSCH, übermittelt; und
Empfangen der zweiten Nachricht auf dem PDSCH, die sich auf die Planungsinformation bezieht,
wobei eine Ressource, die zum Empfangen des PDCCH verwendet wird, auf Basis der Zufallszugriffsressource bestimmt wird, und
wobei die Ressource, die zum Empfangen des PDCCH verwendet wird, einen Suchraum zum Überwachen des PDCCH, eine Kennung zum Maskieren einer zyklischen Redundanzprüfung, CRC, des PDCCH und eine Verwürfelungssequenz zum Verwürfeln des PDCCH beinhaltet.

6. Verfahren nach Anspruch 1, wobei das Durchführen der CCA umfasst:

Durchführen der CCA auf Basis einer ersten CCA-Schwelle und einer ersten CCA-Dauer;
Bestimmen, dass die CCA auf Basis der ersten CCA-Schwelle und der ersten CCA-Dauer fehlgeschlagen ist; und
wiederholtes Versuchen der CCA auf Basis einer zweiten CCA-Schwelle, die größer ist als die erste CCA-Schwelle, und einer zweiten CCA-Dauer, die kürzer ist als die erste CCA-Dauer.

7. Verfahren nach Anspruch 1, wobei das Durchführen der CCA umfasst:

Durchführen der CCA auf Basis einer ersten CCA-Schwelle und einer ersten CCA-Dauer;
Bestimmen, dass die CCA auf Basis der ersten CCA-Schwelle und der ersten CCA-Dauer fehlgeschlagen ist; und
wiederholtes Versuchen der CCA auf Basis einer zweiten CCA-Schwelle, die kleiner ist als die erste CCA-Schwelle, und einer zweiten CCA-Dauer, die länger ist als die erste CCA-Dauer.

8. Verfahren nach Anspruch 1, weiter umfassend:

Übertragen einer ACK-Nachricht zum Darstellen eines Decodierungsergebnisses der zweiten Nachricht,
wobei die ACK-Nachricht auf Basis einer physikalischen Aufwärtsstrecken-Steuerkanal-, PUCCH-, Ressource, übertragen wird, und
wobei die zweite Nachricht Informationen beinhaltet, die sich auf die PUCCH-Ressource beziehen.

9. Drahtlosvorrichtung (50), die zum Übertragen einer Zufallszugriffspräambel in einem unlizenzierten Band konfiguriert ist, wobei die Drahtlosvorrichtung (50) umfasst:

einen Sendeempfänger (53), der so konfiguriert ist, dass er ein Funksignal überträgt und empfängt; und
einen Prozessor (51), der wirkmäßig mit dem Sendeempfänger (53) gekoppelt und so konfiguriert ist, dass er:

den Sendeempfänger (53) so steuert, dass er eine Freikanalanalyse, CCA, auf einem Drahtlosmedium des unlizenzierten Bandes durchführt;
den Sendeempfänger (53) so steuert, dass er auf Basis eines Erfolgs der CCA eine Zufallszugriffspräambel unter Verwendung einer Zufallszugriffsressource überträgt;
den Sendeempfänger (53) so steuert, dass er eine erste Nachricht, die eine Vorrichtungskennung beinhaltet, die die Drahtlosvorrichtung (50) identifiziert, auf einem gemeinsam genutzten physikalischen Aufwärtsstreckenkanal, PUSCH, überträgt,
wobei eine Übertragungsressource, die zum Übertragen des PUSCH verwendet wird, auf Basis der Zufallszugriffsressource bestimmt wird,
wobei die erste Nachricht Informationen beinhaltet, die sich auf die Zufallszugriffsressource beziehen, und
wobei die Übertragungsressource, die zum Übertragen des PUSCH verwendet wird, in einem Schlitz nach einer bestimmten Anzahl von Schlitzen liegt, der auf Basis eines Schlitzes, in dem die Zufallszugriffspräambel übertragen wird, von der Zufallszugriffsressource bestimmt wird; und
den Sendeempfänger (53) so steuert, dass er eine zweite Nachricht als Antwort auf die erste Nachricht empfängt,
wobei die zweite Nachricht eine auf Basis der Vorrichtungskennung erhaltene Hilfskennung, die weniger Bits aufweist als die Vorrichtungskennung, beinhaltet.

**10.** Drahtlosvorrichtung (50) nach Anspruch 9, wobei die erste Nachricht übertragen wird, ohne auf den Empfang einer Antwort der Zufallszugriffspräambel zu warten.

**11.** Drahtlosvorrichtung (50) nach Anspruch 9, wobei die Zufallszugriffsressource die Zeitressource und eine Frequenzressource beinhaltet, die verwendet werden, um die Zufallszugriffspräambel zu übertragen.

**12.** Drahtlosvorrichtung (50) nach Anspruch 9, wobei die Übertragungsressource, die zum Übertragen des PUSCH verwendet wird, eine PUSCH-Sequenzressource beinhaltet.

## Revendications

**1.** Procédé d'émission, par un dispositif sans fil (50), d'un préambule d'accès aléatoire dans une bande sans licence, le procédé comprenant :

la mise en oeuvre d'une évaluation de canal libre, CCA, sur un support sans fil de la bande sans licence ;
l'émission d'un préambule d'accès aléatoire en utilisant une ressource d'accès aléatoire sur la base d'un succès de la CCA ;
l'émission d'un premier message comportant un identifiant de dispositif identifiant le dispositif sans fil (50) sur un canal physique partagé de liaison montante, PUSCH,
dans lequel une ressource d'émission utilisée pour émettre le PUSCH est déterminée sur la base de la ressource d'accès aléatoire,
dans lequel le premier message comporte des informations relatives à la ressource d'accès aléatoire, et
dans lequel la ressource d'émission utilisée pour émettre le PUSCH est dans un intervalle après un certain nombre d'intervalles, qui est déterminé sur la base d'un intervalle dans lequel est émis le préambule d'accès aléatoire, depuis la ressource d'accès aléatoire ; et
la réception d'un deuxième message en réponse au premier message,
dans lequel le deuxième message comporte un identifiant auxiliaire, qui présente moins de bits que l'identifiant de dispositif, obtenu sur la base de l'identifiant de dispositif.

**2.** Procédé selon la revendication 1, dans lequel le premier message est émis sans attendre de recevoir une réponse du préambule d'accès aléatoire.

**3.** Procédé selon la revendication 1, dans lequel la ressource d'accès aléatoire comporte la ressource temporelle et une ressource fréquentielle utilisées pour émettre le préambule d'accès aléatoire.

**4.** Procédé selon la revendication 1, dans lequel la ressource d'émission utilisée pour émettre le PUSCH comporte une ressource de séquence PUSCH.

**5.** Procédé selon la revendication 1, dans lequel la réception du deuxième message comprend :

la réception d'un canal physique de contrôle de liaison descendante, PDCCH, transportant des informations de planification pour un canal physique partagé de liaison descendante, PDSCH ; et
la réception du deuxième message sur le PDSCH relatif aux informations de planification,
dans lequel une ressource utilisée pour recevoir le PDCCH est déterminée sur la base de la ressource d'accès aléatoire, et
dans lequel la ressource utilisée pour recevoir le PDCCH comporte un espace de recherche pour surveiller le PDCCH, un identifiant pour masquer un contrôle de redondance cyclique, CRC, du PDCCH et une séquence de brouillage pour brouiller le PDCCH.

**6.** Procédé selon la revendication 1, dans lequel la mise en oeuvre de la CCA comprend :

la mise en oeuvre de la CCA sur la base d'un premier seuil de CCA et d'une première durée de CCA ;
la détermination que la CCA sur la base du premier seuil de CCA et de la première durée de CCA a échoué ; et
la nouvelle tentative de la CCA, sur la base d'un deuxième seuil de CCA qui est supérieur au premier seuil de CCA et d'une deuxième durée de CCA qui est plus courte que la première durée de CCA.

**7.** Procédé selon la revendication 1, dans lequel la mise en oeuvre de la CCA comprend :

la mise en oeuvre de la CCA sur la base d'un premier seuil de CCA et d'une première durée de CCA ;
la détermination que la CCA sur la base du premier seuil de CCA et de la première durée de CCA a échoué ; et
la nouvelle tentative de la CCA, sur la base d'un deuxième seuil de CCA qui est inférieur au premier seuil de CCA et d'une deuxième durée de CCA qui est plus longue que la première durée de CCA.

**8.** Procédé selon la revendication 1, comprenant en outre :

l'émission d'un message ACK pour représenter un résultat de décodage du deuxième message,
dans lequel le message ACK est émis sur la base d'une ressource de canal physique de contrôle de liaison montante, PUCCH, et
dans lequel le deuxième message comporte des informations relatives à la ressource PUCCH.

**9.** Dispositif sans fil (50) configuré pour émettre un préambule d'accès aléatoire dans une bande sans licence, le dispositif sans fil (50) comprenant :

un émetteur-récepteur (53) configuré pour émettre et recevoir un signal radio ; et
un processeur (51) fonctionnellement couplé à l'émetteur-récepteur (53) et configuré pour :

contrôler l'émetteur-récepteur (53) pour réaliser une évaluation de canal libre, CCA, sur un support sans fil de la bande sans licence ;
contrôler l'émetteur-récepteur (53) pour émettre un préambule d'accès aléatoire en utilisant une ressource d'accès aléatoire sur la base d'un succès de la CCA ;
contrôler l'émetteur-récepteur (53) pour émettre un premier message comportant un identifiant de dispositif identifiant le dispositif sans fil (50) sur un canal physique partagé de liaison montante, PUSCH,
dans lequel une ressource d'émission utilisée pour émettre le PUSCH est déterminée sur la base de la ressource d'accès aléatoire,
dans lequel le premier message comporte des informations relatives à la ressource d'accès aléatoire, et
dans lequel la ressource d'émission utilisée pour émettre le PUSCH est dans un intervalle après un certain nombre d'intervalles, qui est déterminé sur la base d'un intervalle dans lequel est émis le préambule d'accès aléatoire, depuis la ressource d'accès aléatoire ; et
contrôler l'émetteur-récepteur (53) pour recevoir un deuxième message en réponse au premier message,
dans lequel le deuxième message comprend un identifiant auxiliaire, qui présente moins de bits que l'identifiant de dispositif, obtenu sur la base de l'identifiant de dispositif.

**10.** Dispositif sans fil (50) selon la revendication 9, dans lequel le premier message est émis sans attendre de recevoir une réponse du préambule d'accès aléatoire.

**11.** Dispositif sans fil (50) selon la revendication 9, dans lequel la ressource d'accès aléatoire comporte la ressource temporelle et une ressource fréquentielle utilisées pour émettre le préambule d'accès aléatoire.

**12.** Dispositif sans fil (50) selon la revendication 9, dans lequel la ressource d'émission utilisée pour émettre le PUSCH comporte une ressource de séquence PUSCH.

# FIG. 1

1 subcarrier spacing = 15 kHz

1 radio frame = 10 subframes = 10 slots = 10 ms

1 subframe = 1 slot = 1ms

1 slot = 14 OFDM symbols

Frequency

Time

EP 3 751 943 B1

# FIG. 2

# FIG. 3

# FIG. 4

# FIG. 5

510

520

n    n+1    n+k    n+k+1

Slot

Time

▨ : CCA duration

▧ : Random Access Preamble

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- NR two-step random access procedure. *3GPP Draft No. R1-1700300*